# EUROPEAN PATENT APPLICATION

(11) **EP 3 367 736 A1**
(43) Date of publication of application: **29.08.2018**
(21) Application number: 15908515.8
(22) Date of filing: 16.11.2015
(51) Int. Cl.: H04W 72/04, H04W 76/02

(54) **DATA TRANSMISSION METHOD AND APPARATUS**

(71) Applicant: Huawei Technologies Co., Ltd., Longgang District Shenzhen, Guangdong 518129 (CN)
(72) Inventor: PANG, Lingli, Shenzhen Guangdong 518129 (CN); BI, Hao, Shenzhen Guangdong 518129 (CN); ZHENG, Xiaoxiao, Shenzhen Guangdong 518129 (CN); HUANG, Min, Shenzhen Guangdong 518129 (CN)
(74) Representative: Goddar, Heinz J.
(86) International application number: PCT/CN2015/094735
(87) International publication number: WO 2017/084018

(57) **Abstract**

The present invention provides a data transmission method and apparatus. First UE sends a service request message to a first network side device. The first network side device determines, according to an identifier that is of a service and that is in the service request message, a service source that can provide the first UE with data of the requested service. After determining the service source, the first network side device sends configuration information to the first UE, where the configuration information is used to establish a data transmission path between the first UE and the service source. The first UE obtains the data of the requested service from the service source by using the data transmission path, instead of obtaining the data of the requested service from a server by using the first network side device. Therefore, network resources occupied in a data transmission process are reduced, and a delay in the data transmission process is reduced, so that user experience is improved.

## Description

### TECHNICAL FIELD

Embodiments of the present invention relate to the communications technologies, and in particular, to a data transmission method and apparatus.

### BACKGROUND

Service data transmission is usually performed in a client-server (Client-Server) manner. When a client and a server exchange data, a data packet usually passes through a plurality of network side devices, and finally reaches the server or the client.

A long term evolution (Long Term Evolution, LTE for short) system is used as an example. In applications such as Taobao, Youku, and WeChat, user equipment (User Equipment, UE for short) serves as a client, and obtains data from a server by using network side nodes such as an evolved NodeB (evolved NodeB, eNB for short), a serving gateway (Serving Gateway, S-GW for short), and a packet data network gateway (Packet Data Network Gateway, P-GW for short).

However, in a method in the prior art, data needs to pass through a plurality of network side nodes in a transmission process. This occupies a large quantity of network resources.

### SUMMARY

Embodiments of the present invention provide a data transmission method and apparatus, to reduce network resources occupied in a data transmission process.

According to a first aspect, the present invention provides a data transmission method, including:
receiving, by a first network side device, a service request message sent by first user equipment (UE), where the service request message includes an identifier of a service requested by the first UE;
determining, by the first network side device, a service source according to the identifier of the service, where the service source can provide the first UE with data of the service requested by the first UE, and the service source is second UE, the first network side device, or a second network side device adjacent to the first network side device; and
sending, by the first network side device, configuration information to the first UE, where the configuration information includes information about the service source, and is used to establish a data transmission path between the first UE and the service source, and the first UE obtains the data of the requested service from the service source by using the data transmission path.

In a possible design, the service request message further includes a list of UEs that are adjacent to the first UE; and
the determining, by the first network side device, a service source according to the identifier of the service includes:
selecting, by the first network side device, the second UE from the list of the UEs that are adjacent to the first UE, where the second UE has the service requested by the first UE.

In a possible design, the selecting, by the first network side device, the second UE from the list of the UEs that are adjacent to the first UE includes:
selecting, by the first network side device, the second UE from the adjacent UEs according to movement state information of the UEs that are adjacent to the first UE, where
the movement state information of the adjacent UEs includes movement rate levels or movement rates of the adjacent UEs.

In a possible design, the method further includes:
receiving, by the first network side device, service lists and/or the movement state information sent by the adjacent UEs.

In a possible design, before the receiving, by the first network side device, service lists and/or the movement state information sent by the adjacent UEs, the method further includes:
sending, by the first network side device, a report instruction to the adjacent UEs, where the report instruction is used to instruct the adjacent UEs to send the service lists and/or the movement state information.

In a possible design, the method further includes:
receiving, by the first network side device, a data transmission path quality deterioration indication sent by the first UE; and
determining, by the first network side device according to the data transmission path quality deterioration indication, whether to change the data transmission path.

In a possible design, the method further includes:
receiving, by the first network side device, change information sent by the second UE, where the change information includes change information of a service list and/or a change of movement state information; and
determining, by the first network side device according to the change information, whether to change the data transmission path.

In a possible design, the determining, by the first network side device, a service source according to the identifier of the service includes:
if the first network side device determines that the first network side device can provide the data of the service corresponding to the identifier of the service, determining, by the first network side device, the first network side device as the service source; or
if the first network side device determines that a network side device adjacent to the first network side device includes the second network side device that can provide the data of the service corresponding to the identifier of the service, determining, by the first network side device, the second network side device as the service source.

According to a second aspect, the present invention provides a data transmission method, including:
sending, by first user equipment (UE), a service request message to a first network side device, where the service request message includes an identifier of a service requested by the first UE;
receiving, by the first UE, configuration information sent by the first network side device, where the configuration information includes information about a service source, and is used to establish a data transmission path between the first UE and the service source, the service source can provide the first UE with data of the service requested by the first UE, and the service source is second UE, the first network side device, or a second network side device adjacent to the first network side device;
establishing, by the first UE, the data transmission path between the first UE and the service source according to the configuration information; and
obtaining, by the first UE, the data of the requested service from the service source by using the data transmission path.

In a possible design, the service request message further includes a list of UEs that are adjacent to the first UE.

In a possible design, the method further includes: if the first UE detects that quality of the data transmission path deteriorates, sending, by the first UE, a data transmission path quality deterioration indication to the first network side device.

According to a third aspect, the present invention provides a data transmission method, including:
receiving, by second user equipment (UE), configuration information sent by a network side device, where the configuration information is used to establish a data transmission path between first UE and the second UE, and the second UE can provide the first UE with data of a service requested by the first UE;
establishing, by the second UE, the data transmission path between the first UE and the second UE according to the configuration information; and
providing, by the second UE, the first UE with the data of the service requested by the first UE.

In a possible design, the method further includes: sending, by the second UE, a service list and/or movement state information to the first network side device.

In a possible design, the method further includes: when the second UE detects that the service list changes and/or the movement state information of the second UE changes, sending, by the second UE, change information to the first network side device, where the change information includes a change of the service list and/or a change of the movement state information.

In a possible design, the method further includes: periodically sending, by the second UE, the service list and/or the movement state information to the first network side device.

According to a fourth aspect, the present invention provides a data transmission apparatus, where the data transmission apparatus is deployed in a first network side device, and includes:
a receiving module, configured to receive a service request message sent by first user equipment (UE), where the service request message includes an identifier of a service requested by the first UE;
a processing module, configured to determine a service source according to the identifier of the service, where the service source can provide the first UE with data of the service requested by the first UE, and the service source is second UE, the first network side device, or a second network side device adjacent to the first network side device; and
a sending module, configured to send configuration information to the first UE, where the configuration information includes information about the service source, and is used to establish a data transmission path between the first UE and the service source, and the first UE obtains the data of the requested service from the service source by using the data transmission path.

In a possible design, the service request message further includes a list of UEs that are adjacent to the first UE; and the processing module is specifically configured to select the second UE from the list of the UEs that are adjacent to the first UE, where the second UE has the service requested by the first UE.

In a possible design, the processing module is specifically configured to select the second UE from the adjacent UEs according to movement state information of the UEs that are adjacent to the first UE, where the movement state information of the adjacent UEs includes movement rate levels or movement rates of the adjacent UEs.

In a possible design, the receiving module of the first network side device is further configured to receive service lists and/or the movement state information sent by the adjacent UEs.

In a possible design, the sending module of the first network side device is further configured to send a report instruction to the adjacent UEs, where the report instruction is used to instruct the adjacent UEs to send the service lists and/or the movement state information.

In a possible design, the receiving module is further configured to receive a data transmission path quality deterioration indication sent by the first UE; and the processing module is further configured to determine, according to the data transmission path quality deterioration indication, whether to change the data transmission path.

In a possible design, the receiving module is further configured to receive change information sent by the second UE, where the change information includes change information of a service list and/or a change of movement state information; and the processing module is further configured to determine, according to the change information, whether to change the data transmission path.

In a possible design, the processing module is specifically configured to: if it is determined that the first network side device can provide the data of the service corresponding to the identifier of the service, determine the first network side device as the service source; or if it is determined that a network side device adjacent to the first network side device includes the second network side device that can provide the data of the service corresponding to the identifier of the service, determine the second network side device as the service source.

According to a fifth aspect, the present invention provides a data transmission apparatus, including:
a sending module, configured to send a service request message to a first network side device, where the service request message includes an identifier of a service requested by the first UE;
a receiving module, configured to receive configuration information sent by the first network side device, where the configuration information includes information about a service source, and is used to establish a data transmission path between the first UE and the service source, the service source can provide the first UE with data of the service requested by the first UE, and the service source is second UE, the first network side device, or a second network side device adjacent to the first network side device;
a processing module, configured to establish the data transmission path between the first UE and the service source according to the configuration information; and
an obtaining module, configured to obtain the data of the requested service from the service source by using the data transmission path.

In a possible design, the service request message further includes a list of UEs that are adjacent to the first UE.

In a possible design, the sending module of the first UE is further configured to: if it is detected that quality of the data transmission path deteriorates, send a data transmission path quality deterioration indication to the first network side device.

According to a sixth aspect, the present invention provides a data transmission apparatus, including:
a receiving module, configured to receive configuration information sent by a network side device, where the configuration information is used to establish a data transmission path between first UE and second UE, and the second UE can provide the first UE with data of a service requested by the first UE;
a processing module, configured to establish the data transmission path between the first UE and the second UE according to the configuration information; and
a sending module, configured to provide the first UE with the data of the service requested by the first UE.

In a possible design, the sending module is further configured to send a service list and/or movement state information to the first network side device.

In a possible design, the sending module is further configured to: when the second UE detects that the service list changes and/or the movement state information of the second UE changes, send change information to the first network side device, where the change information includes a change of the service list and/or a change of the movement state information.

In a possible design, the sending module is further configured to send the service list and/or the movement state information to the first network side device.

According to the data transmission method and apparatus provided in the present invention, the first UE sends the service request message to the first network side device; the first network side device determines, according to the identifier that is of the service and that is in the service request message, the service source that can provide the first UE with the data of the requested service; after determining the service source, the first network side device sends the configuration information to the first UE, where the configuration information is used to establish the data transmission path between the first UE and the service source; and the first UE obtains the data of the requested service from the service source by using the data transmission path, instead of obtaining the data of the requested service from a server by using the first network side device. Therefore, network resources occupied in a data transmission process are reduced, and a delay in the data transmission process is reduced, so that user experience is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a system architecture according to the present invention;
FIG. 2 is a schematic flowchart of Embodiment 1 of a data transmission method according to the present invention;
FIG. 3 is a schematic structural diagram of Embodiment 1 of a data transmission apparatus according to the present invention;
FIG. 4 is a schematic structural diagram of Embodiment 2 of a data transmission apparatus according to the present invention; and
FIG. 5 is a schematic structural diagram of Embodiment 3 of a data transmission apparatus according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

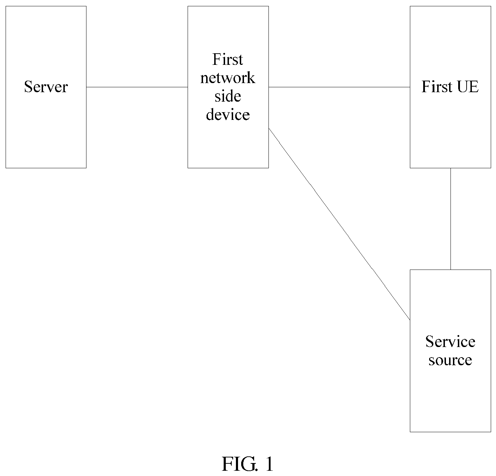

FIG. 1 is a schematic diagram of a system architecture according to the present invention. As shown in FIG. 1, the system architecture diagram in this embodiment includes a server, a first network side device (a network side device, for example, an eNB, that directly performs data transmission with UE), first UE, and a service source. The first UE is UE that requests a service. The service source is a device that can provide the first UE with data of the requested service. The service source may be second UE, the first network side device, and a network side device adjacent to the first network side device. The network side device adjacent to the first network side device is referred to as a second network side device herein. The first network side device may obtain a list of services that can be provided by the second network side device. The second network side device may be further a local service source. Instead of obtaining the data of the requested service from the server by using the first network side device, an S-GW, and a P-GW as in the prior art, in the present invention, when the first UE requests to access the service, the first UE obtains the data of the requested service from the service source by using a data transmission path established between the first UE and the service source that can provide the data of the service requested by the first UE. Therefore, the data of the requested service does not need to be obtained by using a network element between the first network side device and the server, so that network resources occupied in a data transmission process are reduced, and a delay in the data transmission process is reduced.

The following uses specific embodiments to describe in detail the technical solutions of the present invention. The following several specific embodiments may be combined with each other, and a same or similar concept or process may not be repeatedly described in some embodiments.

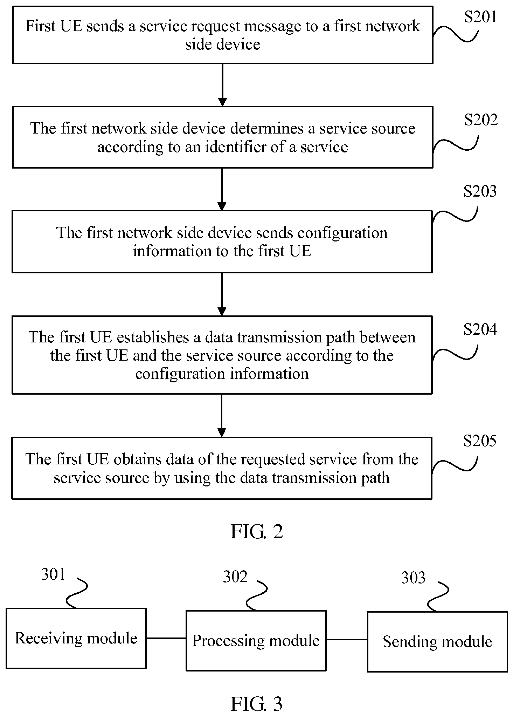

FIG. 2 is a schematic flowchart of Embodiment 1 of a data transmission method according to the present invention. As shown in FIG. 2, a procedure of this embodiment is as follows.

S201. First UE sends a service request message to a first network side device.

The service request message includes an identifier of a service requested by the first UE. The identifier of the service can uniquely identify the service requested by the first UE. In addition to the identifier of the service, the service request message may further include a name of a service provider of the service, a bit rate of the service, a fragment number of the service, and a uniform resource locator (Uniform Resource Locator, URL for short) of the service, so that the first network side device determines, according to the service request message, a service source that can provide the first UE with data of the service.

The service request message may further include an indication of a service sharing capability of the first UE, so that the first network side device determines that the data of the requested service can be provided for the first UE by using second UE. Alternatively, the indication of the service sharing capability of the first UE may not be included in the service request message, but the first UE sends the indication of the service sharing capability of the first UE to the first network side device in advance. Alternatively, whether the UE supports a capability of service sharing is preset in the first network side device or is bound to the service requested by the UE, and the first network side device may learn, through querying, whether the first UE supports service sharing. A specific implementation is not limited in the present invention provided that the first network side device can learn that the first UE supports service sharing.

S202. The first network side device determines a service source according to an identifier of a service.

The service source can provide the first UE with the data of the service requested by the first UE. The service source may be the second UE, the first network side device, or a second network side device, and the first network side device can obtain an information list of services that can be provided by the second network side device.

A manner used by the first network side device to determine whether the second UE supports a capability of service sharing is similar to a manner of determining whether the first UE supports the capability of service sharing. For details, refer to detailed descriptions in S201, and the details are not described herein again.

The first network side device determines the service source according to the identifier of the service. The service source includes but is not limited to the following three types of service source: the second UE, the first network side device, or the second network side device.

A manner of determining the second UE is as follows.

The first network side device first needs to determine a service list of UEs that are adjacent to the first UE. Specifically, in one manner, the first UE may detect the UEs that are adjacent to the first UE, adds, to the service request message, the list of the UEs that are adjacent to the first UE, and sends the service request message to the first network side device. The list of the adjacent UEs may further include information such as detected quality values of the adjacent UEs and locations of the adjacent UEs relative to the first UE. The first network side device learns, from the service request message, of the list of the UEs that are adjacent to the first UE. In another manner, the first network side device obtains, through detection, the list of the UEs that are adjacent to the first UE. A manner used by the first network side device to obtain the list of the UEs that are adjacent to the first UE includes but is not limited to the foregoing manner. This is not limited in the present invention.

The detected quality values of the adjacent UEs are used to evaluate link quality existing when the first UE receives data packets sent by the adjacent UEs. Specifically, the quality values may be distances between the first UE and the adjacent UEs, quality that is of signals sent by the adjacent UEs and that is measured by the first UE, or the like. This is not limited herein.

After the first network side device obtains the list of the UEs that are adjacent to the first UE, the first network side device queries a service list of each of the adjacent UEs, and determines the second UE according to the service list. A service list of the second UE includes the service requested by the first UE.

Specifically, the first network side device determines N candidate adjacent UEs. When N is 1, the first network side device determines the UE as the second UE. When N is an integer greater than or equal to 2, the first network side device determines the second UE from the N candidate adjacent UEs. The first network side device may usually determine, from the N candidate adjacent UEs according to the quality values of the first UE and the adjacent UEs and movement state information of the adjacent UEs, UE with a lowest movement rate level or a minimum movement rate and an optimal quality value as the second UE. When N is 0 or movement states and/or quality values of the N candidate UEs do not meet a requirement, that is, when there is no adjacent UE that can provide the first UE with the data of the requested service, the first network side device instructs the first UE to obtain the data of the requested service from a server.

A manner of determining that the service source is the first network side device is as follows: Whether the first network side device can provide the data of the service requested by the first UE is determined. If the first network side device can provide the data of the service, the first network side device is determined as the service source.

A manner of determining that the service source is the second network side device is as follows: The first network side device determines that a second network side device includes the second network side device (that is, the service source) that can provide the data of the service requested by the first UE. Specifically, the first network side device queries a service list of the second network side device, and determines, as the service source, the second network side device whose service list includes the service requested by the first UE.

It should be noted that, in the foregoing determining process, all of the second UE, the first network side device, and the second network side device may be capable of providing the data of the service requested by the first UE, and the first network side device may select one or more service sources according to an algorithm of the first network side device. This is not limited herein. For example, the first network side device may preferably select the first network side device as the service source.

S203. The first network side device sends configuration information to the first UE.

The configuration information includes information about the service source, and is used to establish a data transmission path between the first UE and the service source. Optionally, the configuration information includes the information about the service source, for example, an address and a port number of the service source. Alternatively, the configuration information includes at least one of a frequency channel number, a layer 2 parameter, and encryption and decryption for establishing a data transmission link by the first UE. After receiving the configuration information sent by the first network side device, the first UE performs S204.

Optionally, if the service source is the second UE, the first network side device further needs to send configuration information to the second UE. After receiving the configuration information sent by the network device, the second UE establishes the data transmission path between the second UE and the first UE according to the configuration information. The configuration information may be different from the configuration information sent to the first UE. For example, the configuration information includes the identifier of the service requested by the first UE and/or address information of the first UE.

Before the second UE receives the configuration information, the second UE may further receive service provisioning request information sent by the first network side device, and the service provisioning request information is used to request the second UE to provide the first UE with the data of the requested service. The request information may include the address information of the first UE and/or the identifier of the requested service.

S204. The first UE establishes a data transmission path between the first UE and the service source according to the configuration information.

S205. The first UE obtains data of the requested service from the service source by using the data transmission path.

In this embodiment, the first UE sends the service request message to the first network side device; the first network side device determines, according to the identifier that is of the service and that is in the service request message, the service source that can provide the first UE with the data of the requested service; after determining the service source, the first network side device sends the configuration information to the first UE, where the configuration information is used to establish the data transmission path between the first UE and the service source; and the first UE obtains the data of the requested service from the service source by using the data transmission path, instead of obtaining the data of the requested service from the server by using nodes such as the first network side device, a PGW, and an SGW. Therefore, network resources occupied in a data transmission process are reduced, and a delay in the data transmission process is reduced, so that user experience is improved.

In the foregoing embodiment, if the service source is the second UE, in the following cases, the first network side device needs to determine whether to change the service source of the first UE.

In one case, when quality of the data transmission path between the first UE and the second UE deteriorates, the first UE detects that the quality of the data transmission path deteriorates, and sends a data transmission path quality deterioration indication to the first network side device. The first network side device determines, according to the data transmission path quality deterioration indication, whether to change the data transmission path, that is, whether to determine a new service source. Specifically, the data transmission path quality deterioration indication includes a measurement result, and the first network side device determines, according to the measurement result, whether to delete the data transmission path.

In another case, when the second UE detects that the service list changes, or a movement state of the second UE changes, or both the service list and the movement state of the second UE change, the second UE sends change information to the first network side device. The change information includes the foregoing changes. The first network side device receives the change information, and determines, according to the change information, whether to change the data transmission path, that is, whether to determine a new service source. Preferably, in a service data transmission process, when the service list of the second UE is about to change, the second UE needs to first notify the first network side device, and the first network side device determines whether the change can be performed; or the second UE needs to notify the first network side device of a time point at which the service list changes, to avoid an impact caused by the change of the service list on a process in which the first UE requests the service.

In the embodiment shown in FIG. 2, before S202, the procedure further includes: The adjacent UEs and the first UE send service lists and/or the movement state information to the first network side device, where the adjacent UEs include the second UE.

The adjacent UEs may send the service lists and/or the movement state information to the first network side device in the following trigger conditions:

In one trigger condition, the adjacent UEs receive a report instruction sent by the first network side device, where the report instruction is used to instruct the adjacent UEs to send the service lists and/or the movement state information; and the adjacent UEs report the service lists and/or the movement state information after receiving the report instruction.

In another trigger condition, the adjacent UEs periodically report the service lists and/or the movement state information.

In still another trigger condition, the adjacent UEs report the service lists and/or the movement state information when the service lists change or the movement state information changes.

In the foregoing embodiment, other UE may serve as relay UE on the data transmission path between the first UE and the second UE, and forward data between the first UE and the second UE.

FIG. 3 is a schematic structural diagram of Embodiment 1 of a data transmission apparatus according to the present invention. The data transmission apparatus in this embodiment is deployed in a first network side device. The apparatus in this embodiment includes a receiving module 301, a processing module 302, and a sending module 303. The receiving module 301 is configured to receive a service request message sent by first user equipment (UE), where the service request message includes an identifier of a service requested by the first UE. The processing module 302 is configured to determine a service source according to the identifier of the service, where the service source can provide the first UE with data of the service requested by the first UE, and the service source is second UE, the first network side device, or a second network side device adjacent to the first network side device. The sending module 303 is configured to send configuration information to the first UE, where the configuration information includes information about the service source, and is used to establish a data transmission path between the first UE and the service source, and the first UE obtains the data of the requested service from the service source by using the data transmission path.

In the foregoing embodiment, the service request message further includes a list of UEs that are adjacent to the first UE. The processing module 302 is specifically configured to select the second UE from the list of the UEs that are adjacent to the first UE. The second UE has the service requested by the first UE.

In the foregoing embodiment, the processing module 302 is specifically configured to select the second UE from the adjacent UEs according to movement state information of the UEs that are adjacent to the first UE. The movement state information of the adjacent UEs includes movement rate levels or movement rates of the adjacent UEs.

In the foregoing embodiment, the receiving module 301 is further configured to receive service lists and/or the movement state information sent by the adjacent UEs.

In the foregoing embodiment, the sending module 303 is further configured to send a report instruction to the adjacent UEs. The report instruction is used to instruct the adjacent UEs to send the service lists and/or the movement state information.

In the foregoing embodiment, the receiving module 301 is further configured to receive a data transmission path quality deterioration indication sent by the first UE.

The processing module 302 is further configured to determine, according to the data transmission path quality deterioration indication, whether to change the data transmission path.

In the foregoing embodiment, the receiving module 301 is further configured to receive change information sent by the second UE. The change information includes change information of a service list and/or a change of movement state information.

The processing module is further configured to determine, according to the change information, whether to change the data transmission path.

In the foregoing embodiment, the processing module 302 is specifically configured to: if it is determined that the first network side device can provide the data of the service corresponding to the identifier of the service, determine the first network side device as the service source; or if it is determined that a network side device adjacent to the first network side device includes the second network side device that can provide the data of the service corresponding to the identifier of the service, determine the second network side device as the service source.

The apparatus in the embodiment shown in FIG. 3 may be correspondingly configured to perform the technical method in the method embodiment shown in FIG. 2, and implementation principles and technical effects thereof are similar. Details are not described herein again.

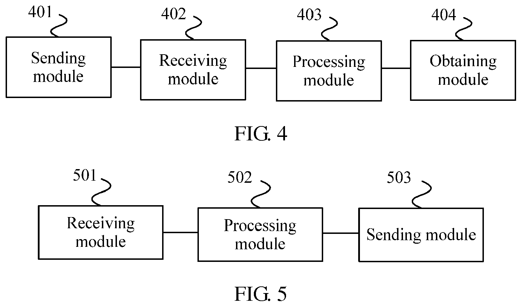

FIG. 4 is a schematic structural diagram of Embodiment 2 of a data transmission apparatus according to the present invention. The apparatus in this embodiment is deployed in first UE. As shown in FIG. 4, the apparatus in this embodiment includes a sending module 401, a receiving module 402, a processing module 403, and an obtaining module 404. The sending module 401 is configured to send a service request message to a first network side device, where the service request message includes an identifier of a service requested by the first UE. The receiving module 402 is configured to receive configuration information sent by the first network side device, where the configuration information includes information about a service source, and is used to establish a data transmission path between the first UE and the service source, the service source can provide the first UE with data of the service requested by the first UE, and the service source is second UE, the first network side device, or a second network side device adjacent to the first network side device. The processing module 403 is configured to establish the data transmission path between the first UE and the service source according to the configuration information. The obtaining module 404 is configured to obtain the data of the requested service from the service source by using the data transmission path.

In the foregoing embodiment, the service request message further includes a list of UEs that are adjacent to the first UE.

In the foregoing embodiment, the sending module 401 is further configured to: if it is detected that quality of the data transmission path deteriorates, send a data transmission path quality deterioration indication to the first network side device.

The apparatus in the embodiment shown in FIG. 4 may be correspondingly configured to perform the technical method in the method embodiment shown in FIG. 2, and implementation principles and technical effects thereof are similar. Details are not described herein again.

FIG. 5 is a schematic structural diagram of Embodiment 3 of a data transmission apparatus according to the present invention. The apparatus in this embodiment is deployed in second UE. The apparatus in this embodiment includes a receiving module 501, a processing module 502, and a sending module 503. The receiving module 501 is configured to receive configuration information sent by a network side device, where the configuration information is used to establish a data transmission path between first UE and the second UE, and the second UE can provide the first UE with data of a service requested by the first UE. The processing module 502 is configured to establish the data transmission path between the first UE and the second UE according to the configuration information. The sending module 503 is configured to provide the first UE with the data of the service requested by the first UE.

In the foregoing embodiment, the sending module 503 is further configured to send a service list and/or movement state information to the first network side device.

In the foregoing embodiment, the sending module 503 is further configured to: when the second UE detects that the service list changes and/or the movement state information of the second UE changes, send change information to the first network side device. The change information includes a change of the service list and/or a change of the movement state information.

In the foregoing embodiment, the sending module 503 is further configured to send the service list and/or the movement state information to the first network side device.

The apparatus in the embodiment shown in FIG. 5 may be correspondingly configured to perform the technical method in the method embodiment shown in FIG. 2, and implementation principles and technical effects thereof are similar. Details are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission method, comprising:
receiving, by a first network side device, a service request message sent by first user equipment (UE), wherein the service request message comprises an identifier of a service requested by the first UE;
determining, by the first network side device, a service source according to the identifier of the service, wherein the service source can provide the first UE with data of the service requested by the first UE, and the service source is second UE, the first network side device, or a second network side device adjacent to the first network side device; and
sending, by the first network side device, configuration information to the first UE, wherein the configuration information comprises information about the service source, and is used to establish a data transmission path between the first UE and the service source, and the first UE obtains the data of the requested service from the service source by using the data transmission path.

2. The method according to claim 1, wherein the service request message further comprises a list of UEs that are adjacent to the first UE; and
the determining, by the first network side device, the service source according to the identifier of the service comprises:
selecting, by the first network side device, the second UE from the list of the UEs that are adjacent to the first UE, wherein the second UE has the service requested by the first UE.

3. The method according to claim 2, wherein the selecting, by the first network side device, the second UE from the list of the UEs that are adjacent to the first UE comprises:
selecting, by the first network side device, the second UE from the adjacent UEs according to movement state information of the UEs that are adjacent to the first UE, wherein
the movement state information of the adjacent UEs comprises movement rate levels or movement rates of the adjacent UEs.

4. The method according to claim 3, further comprising:
receiving, by the first network side device, service lists and/or the movement state information sent by the adjacent UEs.

5. The method according to claim 4, wherein before the receiving, by the first network side device, the service lists and/or the movement state information sent by the adjacent UEs, the method further comprises:
sending, by the first network side device, a report instruction to the adjacent UEs, wherein the report instruction is used to instruct the adjacent UEs to send the service lists and/or the movement state information.

6. The method according to any one of claims 1 to 5, further comprising:
receiving, by the first network side device, a data transmission path quality deterioration indication sent by the first UE; and
determining, by the first network side device according to the data transmission path quality deterioration indication, whether to change the data transmission path.

7. The method according to any one of claims 1 to 5, further comprising:
receiving, by the first network side device, change information sent by the second UE, wherein the change information comprises change information of a service list and/or a change of movement state information; and
determining, by the first network side device according to the change information, whether to change the data transmission path.

8. The method according to claim 1, wherein
the determining, by the first network side device, the service source according to the identifier of the service comprises:
if the first network side device determines that the first network side device can provide the data of the service corresponding to the identifier of the service, determining, by the first network side device, the first network side device as the service source; or
if the first network side device determines that a network side device adjacent to the first network side device comprises the second network side device that can provide the data of the service corresponding to the identifier of the service, determining, by the first network side device, the second network side device as the service source.

9. A data transmission method, comprising:
sending, by first user equipment (UE), a service request message to a first network side device, wherein the service request message comprises an identifier of a service requested by the first UE;
receiving, by the first UE, configuration information sent by the first network side device, wherein the configuration information comprises information about a service source, and is used to establish a data transmission path between the first UE and the service source, the service source can provide the first UE with data of the service requested by the first UE, and the service source is second UE, the first network side device, or a second network side device adjacent to the first network side device;
establishing, by the first UE, the data transmission path between the first UE and the service source according to the configuration information; and
obtaining, by the first UE, the data of the requested service from the service source by using the data transmission path.

10. The method according to claim 9, wherein the service request message further comprises a list of UEs that are adjacent to the first UE.

11. The method according to claim 9 or 10, wherein the method further comprises:
if the first UE detects that quality of the data transmission path deteriorates, sending, by the first UE, a data transmission path quality deterioration indication to the first network side device.

12. A data transmission method, comprising:
receiving, by second user equipment (UE), configuration information sent by a network side device, wherein the configuration information is used to establish a data transmission path between first UE and the second UE, and the second UE can provide the first UE with data of a service requested by the first UE;
establishing, by the second UE, the data transmission path between the first UE and the second UE according to the configuration information; and
providing, by the second UE, the first UE with the data of the service requested by the first UE.

13. The method according to claim 12, wherein the method further comprises:
sending, by the second UE, a service list and/or movement state information to the first network side device.

14. The method according to claim 13, wherein the method further comprises:
when the second UE detects that the service list changes and/or the movement state information of the second UE changes, sending, by the second UE, change information to the first network side device, wherein the change information comprises a change of the service list and/or a change of the movement state information.

15. The method according to claim 14, wherein the method further comprises:
periodically sending, by the second UE, the service list and/or the movement state information to the first network side device.

16. A data transmission apparatus, wherein the data transmission apparatus is deployed in a first network side device, and comprises:
a receiving module, configured to receive a service request message sent by first user equipment (UE), wherein the service request message comprises an identifier of a service requested by the first UE;
a processing module, configured to determine a service source according to the identifier of the service, wherein the service source can provide the first UE with data of the service requested by the first UE, and the service source is second UE, the first network side device, or a second network side device adjacent to the first network side device; and
a sending module, configured to send configuration information to the first UE, wherein the configuration information comprises information about the service source, and is used to establish a data transmission path between the first UE and the service source, and the first UE obtains the data of the requested service from the service source by using the data transmission path.

17. The apparatus according to claim 16, wherein the service request message further comprises a list of UEs that are adjacent to the first UE; and
the processing module is specifically configured to select the second UE from the list of the UEs that are adjacent to the first UE, wherein the second UE has the service requested by the first UE.

18. The apparatus according to claim 17, wherein the processing module is specifically configured to select the second UE from the adjacent UEs according to movement state information of the UEs that are adjacent to the first UE, wherein the movement state information of the adjacent UEs comprises movement rate levels or movement rates of the adjacent UEs.

19. The method according to claim 18, wherein the receiving module is further configured to receive service lists and/or the movement state information sent by the adjacent UEs.

20. The apparatus according to claim 19, wherein the sending module is further configured to send a report instruction to the adjacent UEs, wherein the report instruction is used to instruct the adjacent UEs to send the service lists and/or the movement state information.

21. The apparatus according to any one of claims 16 to 20, wherein the receiving module is further configured to receive a data transmission path quality deterioration indication sent by the first UE; and
the processing module is further configured to determine, according to the data transmission path quality deterioration indication, whether to change the data transmission path.

22. The apparatus according to any one of claims 16 to 20, wherein the receiving module is further configured to receive change information sent by the second UE, wherein the change information comprises change information of a service list and/or a change of movement state information; and
the processing module is further configured to determine, according to the change information, whether to change the data transmission path.

23. The apparatus according to claim 16, wherein
the processing module is specifically configured to: if it is determined that the first network side device can provide the data of the service corresponding to the identifier of the service, determine the first network side device as the service source; or
if it is determined that a network side device adjacent to the first network side device comprises the second network side device that can provide the data of the service corresponding to the identifier of the service, determine the second network side device as the service source.

24. A data transmission apparatus, comprising:
a sending module, configured to send a service request message to a first network side device, wherein the service request message comprises an identifier of a service requested by the first UE;
a receiving module, configured to receive configuration information sent by the first network side device, wherein the configuration information comprises information about a service source, and is used to establish a data transmission path between the first UE and the service source, the service source can provide the first UE with data of the service requested by the first UE, and the service source is second UE, the first network side device, or a second network side device adjacent to the first network side device;
a processing module, configured to establish the data transmission path between the first UE and the service source according to the configuration information; and
an obtaining module, configured to obtain the data of the requested service from the service source by using the data transmission path.

25. The apparatus according to claim 24, wherein the service request message further comprises a list of UEs that are adjacent to the first UE.

26. The apparatus according to claim 24 or 25, wherein the sending module is further configured to: if it is detected that quality of the data transmission path deteriorates, send a data transmission path quality deterioration indication to the first network side device.

27. A data transmission apparatus, comprising:
a receiving module, configured to receive configuration information sent by a network side device, wherein the configuration information is used to establish a data transmission path between first UE and second UE, and the second UE can provide the first UE with data of a service requested by the first UE;
a processing module, configured to establish the data transmission path between the first UE and the second UE according to the configuration information; and
a sending module, configured to provide the first UE with the data of the service requested by the first UE.

28. The apparatus according to claim 27, wherein the sending module is further configured to send a service list and/or movement state information to the first network side device.

29. The apparatus according to claim 28, wherein the sending module is further configured to: when the second UE detects that the service list changes and/or the movement state information of the second UE changes, send change information to the first network side device, wherein the change information comprises a change of the service list and/or a change of the movement state information.

30. The apparatus according to claim 29, wherein the sending module is further configured to send the service list and/or the movement state information to the first network side device.
